Europäisches Patentamt

European Patent Office

Office européen des brevets

(11) Numéro de publication: **0 381 562**
**A1**

(12) **DEMANDE DE BREVET EUROPEEN**

(21) Numéro de dépôt: 90400227.6

(22) Date de dépôt: **25.01.90**

(51) Int. Cl.⁵: **F04D 27/00, A01C 15/04**

(30) Priorité: **31.01.89 FR 8901215**

(43) Date de publication de la demande:
**08.08.90 Bulletin 90/32**

(84) Etats contractants désignés:
**AT BE CH DE DK ES GB IT LI NL**

(71) Demandeur: **NODET-GOUGIS**
**5 Boulevard du Général-Leclerc B.P. 36**
**F-77130 Montereau(FR)**

(72) Inventeur: **Massart, Bernard**
**15 rue de Provins**
**F-77130 Montereau(FR)**

(74) Mandataire: **Berogin, Francis et al**
**CABINET HARLE & PHELIP 21, rue de la**
**Rochefoucauld**
**F-75009 Paris(FR)**

(54) **Procédé et dispositif de régulation du point de fonctionnement d'un ventilateur monté sur un appareil agricole.**

(57) L'invention est relative à un procédé et un dispositif pour la régulation automatique du point de fonctionnement d'un ventilateur utilisé dans un appareil agricole dont le fonctionnement nécessite au moins une source de pression différente de la pression atmosphérique, entre un seuil minimal et un seuil maximal de pression en aval du ventilateur et/ou un seuil minimal et un seuil maximal de dépression en amont dudit ventilateur, pour un débit d'air absorbé par le ventilateur compris entre une première et une deuxième borne.

Selon l'invention, le procédé consiste à mettre en communication l'amont du ventilateur avec l'atmosphère de telle sorte que la pression en aval du ventilateur ne devienne pas inférieure audit seuil minimal de pression et à mettre en communication l'aval du ventilateur avec l'atmosphère de telle sorte que la dépression en amont ne devienne pas inférieure audit seuil minimal de dépression.

Selon l'invention, le dispositif comprend un premier clapet (21) taré, placé dans la partie amont du ventilateur et un deuxième clapet (34) taré, placé dans la partie aval du ventilateur. Application à l'agriculture.

FIG.1

La présente invention est relative à un procédé et un dispositif pour la régulation automatique du point de fonctionnement d'un ventilateur utilisé dans un appareil agricole dont le fonctionnement nécessite au moins une source de pression différente de la pression atmosphérique.

On sait que certains distributeurs de semoir monograine fonctionnent à l'aide d'une dépression. A titre d'exemple, le brevet EP-00 46709 décrit un distributeur à dépression pour semoir monograine comprenant un disque de distribution rotatif muni d'une file circulaire de perforations, un carter dont l'intérieur est divisé par le disque en deux enceintes contiguës dont l'une sert de réservoir à graines et dont l'autre, qui s'étend sur une partie de la trajectoire des perforations du disque, constitue une chambre à dépression.

D'autres distributeurs de semoir fonctionnent à la fois grâce à une source de dépression et une source de pression. En particulier, le brevet EP-00 37775 décrit un semoir à éjecteur pneumatique destiné notamment au semis de graines légères telles que les graines de légumes, le semoir étant du type qui comporte un organe distributeur destiné à transporter les graines, des moyens pour libérer celles-ci dudit organe dans une zone de lâchage, et un dispositif d'éjection. L'organe distributeur comporte un disque perforé destiné à tourner devant une chambre d'aspiration placée d'un premier côté du disque et interrompue dans la zone de lâchage, la chambre d'aspiration étant reliée à une source de dépression. Le dispositif d'éjection comporte un venturi d'éjection orienté vers le sol, accolé à l'autre côté du disque perforé et ayant un convergent, relié à une source de fluide comprimé, un col comportant un orifice d'entrée des graines transportées et maintenues par le disque, et un divergent, l'orifice formé dans le col ou à proximité de celui-ci se trouvant dans la zone de lâchage ou à proximité de celle-ci, le col du venturi étant en outre disposé par rapport à la chambre d'aspiration de manière que, lorsque les graines sont lâchées par le disque perforé, elles se trouvent déjà sensiblement dans le col du venturi ou en aval de ce col.

On connait aussi des appareils d'épandage agricole, appelés également épandeurs, qui sont destinés à l'épandage par projection forcée de produits en graines ou granulés pour le traitement de sols, tels que des engrais, des herbicides, des insecticides, et qui peuvent également être utilisés pour semer des graines de petites tailles, dans un mode de semis dit "à la volée". De tels appareils comprennent des moyens de mise en vitesse et de projection des produits granuleux qui sont supportés par un châssis et alimentés en produits granuleux à partir d'au moins une trémie, ainsi que des moyens de répartition. Les moyens de mise en vitesse sont par exemple connectés à une source de fluide comprimé qui permet de communiquer aux produits une vitesse qui assure leur projection vers les moyens de répartition. Ceux-ci sont en général constitués par un faisceau de tubes, de longueurs progressivement décroissantes. Ces tubes guident et transportent les produits jusque vers le sol.

Dans les appareils agricoles ne nécessitant qu'une source de pression différente de la pression atmosphérique, source de dépression pour notamment les semoirs monograine incorporant un distributeur conforme au brevet EP-00 46709, ou source de pression pour notamment les appareils d'épandage pneumatique, cette source peut être générée par un ventilateur.

Cependant, un appareil agricole peut nécessiter deux sources de pression différente de la pression atmosphérique, et en particulier une source de dépression et une source de pression. C'est le cas pour un semoir à éjecteur pneumatique tel que décrit dans le brevet EP-00 37775 ou pour un appareil agricole incorporant à la fois un semoir monograine à dépression et un épandeur pneumatique. Dans ce cas, les sources de pression et de dépression sont généralement générées par deux voire trois ventilateurs.

On comprend que le montage de deux ou trois ventilateurs sur un appareil est relativement complexe et onéreux.

Si l'on souhaite n'utiliser qu'un ventilateur unique pour générer à la fois une source de pression et une source de dépression, se posent alors des problèmes de régulation de ce ventilateur.

En effet, chaque ventilateur présente des caractéristiques de fonctionnement de telle sorte que pour un débit d'air absorbé par le ventilateur, la pression totale du ventilateur, c'est-à-dire la somme des valeurs absolues de la dépression en amont (ou à l'entrée) du ventilateur et de la pression en aval (ou en sortie) du ventilateur, est imposée et constante.

Or le bon fonctionnement d'un appareil agricole, utilisant à la fois une source de pression et une source de dépression, impose un seuil minimal de pression et un seuil minimal de dépression.

Il faut de plus noter que ces seuils minima de pression et de dépression ne doivent pas varier en fonction de l'utilisation de l'appareil agricole, bien que, par exemple pour un appareil comportant à la fois un semoir utilisant un distributeur à disque à dépression et un épandeur, le nombre de disques, la structure des disques et la dépression appliquée à ceux-ci changent en fonction notamment du diamètre moyen des graines à semer et du nombre de rangs à semer. De plus la pression du fluide comprimé utilisé par l'épandeur ne doit pas être inférieure à un seuil minimum quel que soit la nature des produits à répartir et le nombre de rangs concernés.

Ce bon fonctionnement doit donc être assuré par un système de régulation.

On a envisagé un système de régulation par des volets statiques, occupant des positions réglables, et permettant de fixer, pour des conditions données de fonctionnement du semoir, les sections des conduits d'air en amont et en aval du ventilateur. Ces volets statiques pourraient être actionnés manuellement par l'utilisateur, grâce à des tables et des graduations figurant sur les volets, ce qui impose une manipulation relativement longue. Ils pourraient aussi être asservis à une logique de commande de façon à rendre leur fonctionnement automatique.

Un système automatisé de régulation par volets statiques impose alors une logique de commande relativement complexe et coûteuse.

L'invention se propose de pallier les inconvénients des systèmes qui viennent d'être décrits en proposant un procédé et un dispositif de régulation automatique du point de fonctionnement d'un ventilateur, utilisé dans un appareil agricole dont le fonctionnement nécessite au moins une source de pression différente de la pression atmosphérique, entre un seuil minimal et un seuil maximal de dépression en amont (à l'entrée) du ventilateur et un seuil minimal et un seuil maximal de pression en aval (en sortie) du ventilateur, qui soit automatique et de réalisation simple.

L'invention est relative à un procédé de régulation automatique du point de fonctionnement d'un ventilateur, utilisé dans un appareil agricole dont le fonctionnement nécessite au moins une source de pression différente de la pression atmosphérique, entre un seuil minimal et un seuil maximal de pression en aval du ventilateur et/ou un seuil minimal et un seuil maximal de dépression en amont dudit ventilateur, pour un débit d'air absorbé par le ventilateur compris entre une première et une deuxième bornes.

Selon l'invention, le procédé consiste à mettre en communication l'amont du ventilateur avec l'atmosphère de telle sorte que la pression en aval du ventilateur ne devienne pas inférieure audit seuil minimal de pression et à mettre en communication l'aval du ventilateur avec l'atmosphère de telle sorte que la dépression en amont ne devienne pas inférieure audit seuil minimal de dépression.

L'invention concerne aussi un dispositif pour la régulation automatique du point de fonctionnement d'un ventilateur, utilisé dans un appareil agricole dont le fonctionnement nécessite au moins une source de pression différente de la pression atmosphérique, entre un seuil minimal et un seuil maximal de pression en aval du ventilateur et/ou un seuil minimal et un seuil maximal de dépression en amont du ventilateur, pour un débit d'air absorbé par le ventilateur compris entre une première et une deuxième bornes.

Selon l'invention, le dispositif comprend un premier clapet placé dans la partie amont du ventilateur et un deuxième clapet placé dans la partie aval du ventilateur, ledit premier clapet étant taré de façon à mettre l'amont du ventilateur en communication avec l'extérieur de telle sorte que la pression en aval ne devienne pas inférieure au seuil minimal de pression et ledit deuxième clapet étant taré de façon à mettre l'aval du ventilateur en communication avec l'extérieur de telle sorte que la dépression en amont ne devienne pas inférieure au seuil minimal de dépression.

Selon un premier mode de réalisation de l'invention, ledit premier clapet est placé dans le carter du ventilateur.

Selon un deuxième mode de réalisation de l'invention, ledit deuxième clapet est placé dans le conduit de sortie du ventilateur.

De préférence, ledit premier clapet comprend un support placé à l'intérieur du ventilateur, un obturateur appliqué contre son siège par un ressort taré et dont la face externe est en contact avec la pression atmosphérique.

De préférence, ledit deuxième clapet comprend un support placé à l'extérieur du ventilateur, un obturateur appliqué contre son siège par un ressort taré et dont la face interne est en contact avec la pression atmosphérique.

Selon un mode préféré de l'invention, une grille est placée entre le siège du clapet et l'obturateur.

Selon un autre mode de réalisation de l'invention, ledit premier clapet est constitué par un ressort de traction précontraint, à spires jointives au repos, fixé par au moins une spire à la face interne du ventilateur et dont au moins la dernière spire supporte une plaque fermant la partie centrale dudit ressort.

Selon un autre mode de réalisation de l'invention, ledit deuxième clapet est constitué par un ressort de traction précontraint, à spires jointives au repos, fixé par au moins une spire à la face externe du ventilateur et dont au moins la deuxième spire supporte une plaque fermant la partie centrale dudit ressort.

Selon un autre mode de réalisation de l'invention, l'un au moins desdits clapets est constitué par un obturateur pouvant obturer l'orifice sur lequel est placé ledit clapet et appliqué contre son siège par un ressort de torsion précontraint dont l'axe est situé dans un plan parallèle à celui de l'orifice et fixé à proximité du siège.

L'invention est relative de plus à un semoir à dépression comportant au moins un distributeur de graines à dépression ainsi qu'à un épandeur pneumatique de produits phyto-sanitaires, ce dernier étant éventuellement monté sur le semoir.

Selon l'invention, le semoir comporte un seul ventilateur et un dispositif de régulation du point de fonctionnement dudit ventilateur selon l'invention, au moins un distributeur étant relié à l'amont dudit ventilateur par un tuyau de dépression et, éventuellement, au moins un épandeur étant relié à l'aval dudit ventilateur par un tuyau de pression.

L'invention concerne aussi un semoir à dépression comportant au moins un distributeur de graines à presion et dépression.

Selon l'invention, le semoir comporte un seul ventilateur et un dispositif de régulation du point de fonctionnement dudit ventilateur selon l'invention, au moins un distributeur étant relié à l'amont dudit ventilateur par un tuyau de dépression et à l'aval dudit ventilateur par un tuyau de pression.

Selon un mode préféré de réalisation de l'invention, le semoir comporte de plus au moins un épandeur pneumatique de produits phyto-sanitaires, au moins un épandeur étant relié à l'aval dudit ventilateur par un tuyau de pression.

La présente invention sera mieux comprise et d'autres buts, avantages et caractéristiques de celle-ci apparaîtront plus clairement à la lecture de la description qui suit de modes de réalisation de l'invention donnés à titre non limitatif et à laquelle des dessins sont annexés sur lesquels :

- la figure 1 représente un exemple d'appareil agricole sur lequel est monté le dispositif selon l'invention,

- la figure 2 représente une vue en coupe selon II-II de la figure 1,

- la figure 3 représente une vue en coupe selon III-III de la figure 1,

- la figure 4 représente une vue en coupe selon IV-IV de la figure 1 et

- la figure 5 représente une vue en coupe d'un premier exemple de clapet monté dans le dispositif selon l'invention,

- la figure 6 représente une vue en coupe d'un deuxième exemple de clapet monté dans le dispositif selon l'invention,

- la figure 7 représente une vue en coupe d'un troisième exemple de clapet pouvant être monté dans le dispositif selon l'invention et

- la figure 8 comprend les figures 8a et 8b, la figure 8a représente une vue de dessus d'un quatrième exemple de réalisation de clapet pouvant être monté dans le dispositif selon l'invention et la figure 8b représente une vue en coupe selon VIII-VIII de la figure 8a.

Les éléments communs aux différentes figures seront désignés par les mêmes références.

L'appareil agricole partiellement représenté sur les figures, comporte un semoir à dépression et un épandeur.

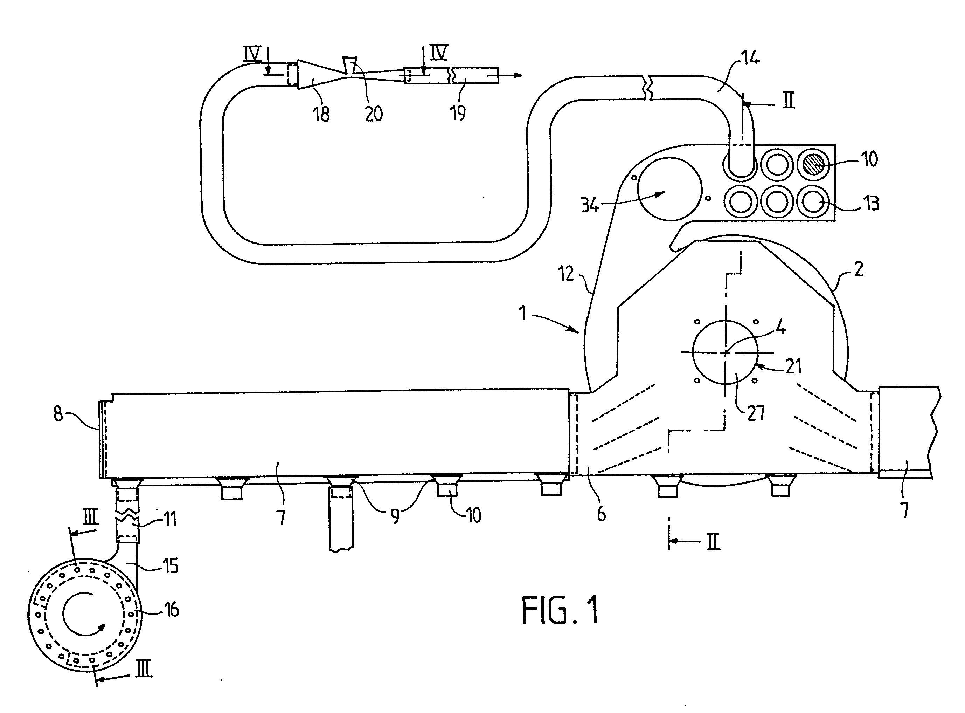

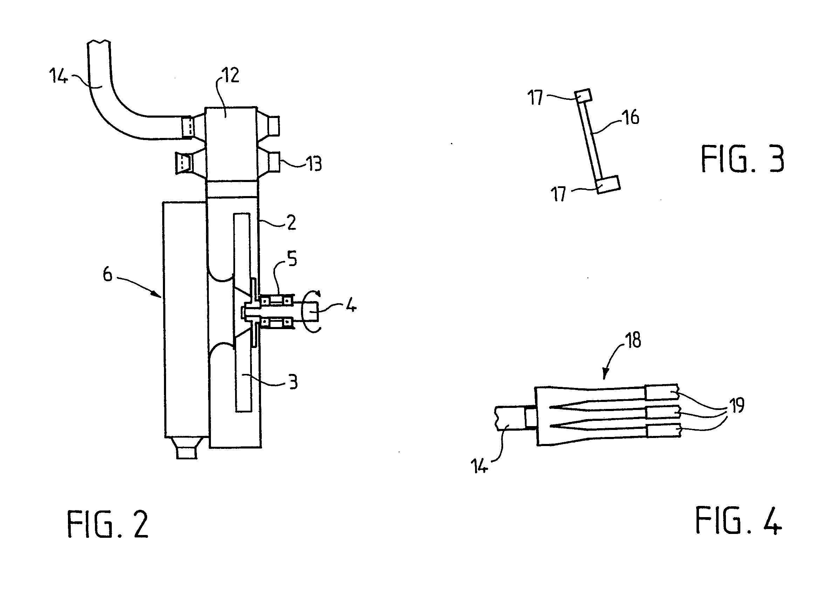

En référence aux figures 1 à 4, le châssis de l'appareil agricole, non représenté, supporte un ventilateur 1. Celui-ci comprend un carter 2 dans lequel est monté un rotor 3 solidaire d'un axe 4. L'axe 4 et le rotor 3 sont montés en rotation dans des moyens 5 partiellement représentés sur la figure 2 et entraînés en rotation à partir d'un moteur non représenté.

Le carter 2 présente une forme sensiblement symétrique par rapport au plan de coupe II-II passant par l'axe 4. Dans sa partie arrière et inférieure, le carter comporte au moins un collecteur 6, définissant l'entrée (ou l'amont) du ventilateur. Dans cet exemple de réalisation, le carter 2 comporte un collecteur 6, relié à une première extrémité de chacune de deux gaines 7 d'aspiration. Les deux gaines d'aspiration 7 sont sensiblement identiques, c'est pourquoi une seule est représentée de façon complète sur la figure 1. Elles présentent une section sensiblement rectangulaire et sont fermées à leur deuxième extrémité par un bouchon 8. Sur la face inférieure de chaque gaine d'aspiration 7 et du carter 2 sont ménagées des ouvertures 9. Elles peuvent être obturées par un bouchon 10 ou connectées à un tuyau 11, dit de dépression.

Le carter 2 comporte, dans sa partie supérieure, un conduit 12 qui définit la sortie (ou l'aval) du ventilateur 1. A l'extrémité aval du conduit 12 sont ménagées des ouvertures 13. Elles peuvent être obturées par un bouchon 10 ou connectées à un tuyau 14 dit de pression.

Dans le cas où le semoir monté sur l'appareil agricole inclut au moins un distributeur à dépression, tel que décrit dans le brevet EP-00 46709 précédemment cité, un tuyau 11 de dépression est connecté, par l'intermédiaire d'un couvercle d'aspiration 15, à l'une des deux enceintes créées par le disque de distribution 16 à l'intérieur du carter du distributeur. Le tuyau 11 est relié à l'enceinte 17 qui s'étend sur une partie de la trajectoire des perforations du disque et qui constitue une chambre à dépression. L'autre enceinte, contigüe, sert de réservoir à graines.

On sait que la structure du disque de distribution rotatif qui est muni d'une file circulaire de perforations, est choisie en fonction du diamètre moyen des graines à semer et de l'espacement souhaité des graines dans le sillon.

On prévoit autant de distributeurs que de rangs à semer. Dans cet exemple de réalisation, douze rangs peuvent être semés simultanément. Si l'on ne souhaite semer qu'un nombre inférieur de sillons, il suffit alors de fermer les ouvertures 9 en surnombre qui doivent être condamnées par un bouchon 10. Les autres ouvertures 9 seront connectées à un distributeur à disque par l'intermédiaire d'un tuyau 11 et d'un couvercle d'aspiration 15.

En aval du ventilateur 1, l'épandage est éventuellement réalisé pour un rang donné en connectant tout d'abord un tuyau 14 de pression dans une des ouvertures 13 ménagées dans le conduit de sortie 12 du ventilateur. L'extrémité libre du tuyau 14 est alors connectée à l'entrée d'un venturi 18. La figure 4 représente, en coupe selon IV-IV, un exemple de venturi à trois rangs. Le tuyau 14 peut être connecté à un venturi simple à un rang et de préférence à un venturi à trois, six ou neuf rangs. On désigne par "rang", une sortie 19 du venturi. Les produits phyto-sanitaires, qui doivent être projetés par l'épandeur, sont introduits dans le venturi 18 par l'intermédiaire d'une goulotte 20 qui est connectée à une trémie, non représentée sur la figure 1.

Si l'on utilise un venturi simple à un rang, le tuyau 14 permet de réaliser l'épandage d'un seul produit phyto-sanitaire, sur un sillon unique.

Lorsque l'on utilise un venturi à trois rangs, le tuyau 14 permet de réaliser par exemple l'épandage d'un produit phyto-sanitaire sur trois sillons ou l'épandage de trois produits phyto-sanitaires différents sur un sillon unique.

De même, si l'on utilise un venturi à six rangs 19, le tuyau 14 permet par exemple de réaliser l'épandage d'un seul produit phyto-sanitaire sur six sillons ou l'épandage de trois produits phyto-sanitaires sur deux rangs.

Il peut être intéressant de réaliser l'épandage de produits phyto-sanitaires différents sur un sillon, lors d'un même passage de l'appareil agricole. Pour un même sillon, une sortie 19 d'un venturi 18 peut permettre de transporter des engrais dans le sillon ouvert au moment où la graine est lâchée dans le sillon, une autre sortie 19 du venturi transportant des herbicides jusqu'au sillon après fermeture de celui-ci et une dernière sortie du venturi envoyant ensuite des insecticides sur ce même sillon refermé.

Dans cet exemple de réalisation, les ouvertures 13 ménagées dans le conduit de sortie 12 du ventilateur sont au nombre de douze ; six ouvertures étant ménagées sur deux faces opposées du conduit 12.

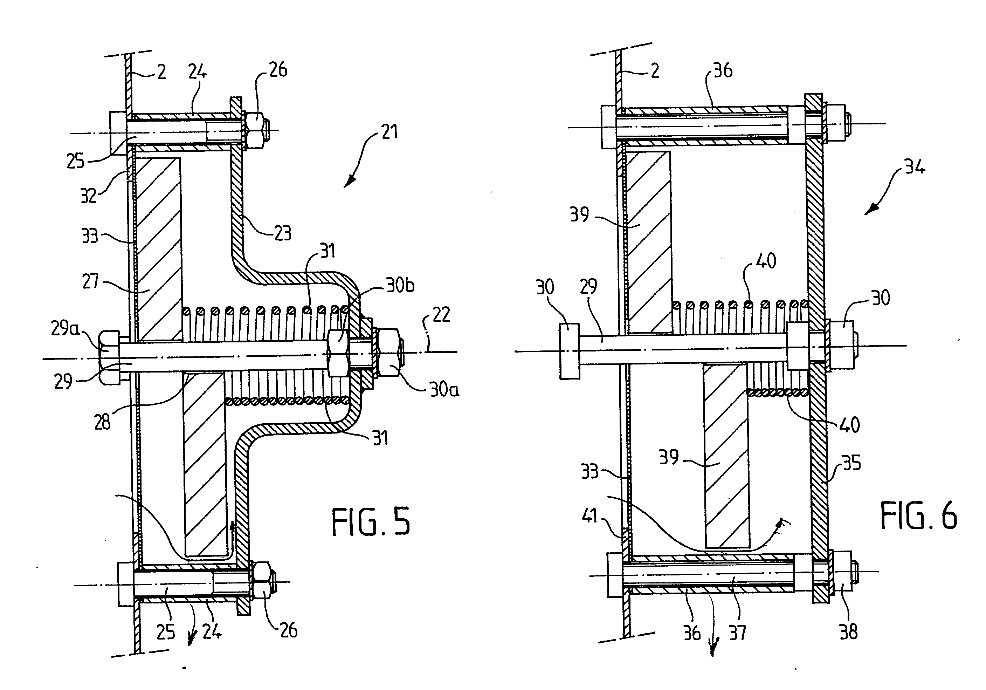

Sur le carter 2 du ventilateur 1 est monté un premier clapet 21. Dans cet exemple de réalisation, le clapet 21 est monté de telle sorte que son axe 22 se trouve dans le prolongement de l'axe 4 du rotor 3 du ventilateur 1. En référence à la figure 5, le clapet comporte un support 23 qui est fixé au carter 2 par l'intermédiaire d'entretoises 24, de vis 25 et d'écrous 26. Le clapet 21 comprend de plus un obturateur 27, présentant sensiblement la forme d'un disque. L'obturateur 27 comporte, sensiblement en son centre, un évidement 28 dans lequel est placée une vis 29 qui comporte à une extrémité une tête 29a et qui est fixée à son autre extrémité sur le support 23 du clapet, par l'intermédiaire d'un écrou 30a et d'un contre-écrou 30b. L'obturateur 27 peut prendre appui sur le carter 2 du ventilateur au niveau de sa périphérie, cette portion du carter 2 formant le siège 32 du clapet. Enfin, un ressort hélicoïdal 31 est placé entre la face interne du support 23 et la face interne de l'obturateur 27, en étant enroulé autour de la vis 29. La vis 29 sert de guide pour l'obturateur 27 et pour le ressort 31. Le ressort 31 permet d'appliquer l'obturateur 27 contre son siège 32. Comme nous le verrons ultérieurement, le ressort 31 du clapet 21 est taré à une valeur déterminée. De façon préférée, on place une grille 33 entre le siège 32 du clapet et son obturateur 27. L'intérêt de cette grille 33 sera précisé plus loin.

On comprend que la face externe de l'obturateur 27 ou la face externe de la grille 33 lorsqu'elle est prévue, est en contact avec la pression atmosphérique à l'extérieur du carter 2, tandis que le corps du clapet 21 se trouve placé à l'intérieur du carter 2 du ventilateur dans lequel règne une pression inférieure à la pression atmosphérique lorsque le ventilateur fonctionne.

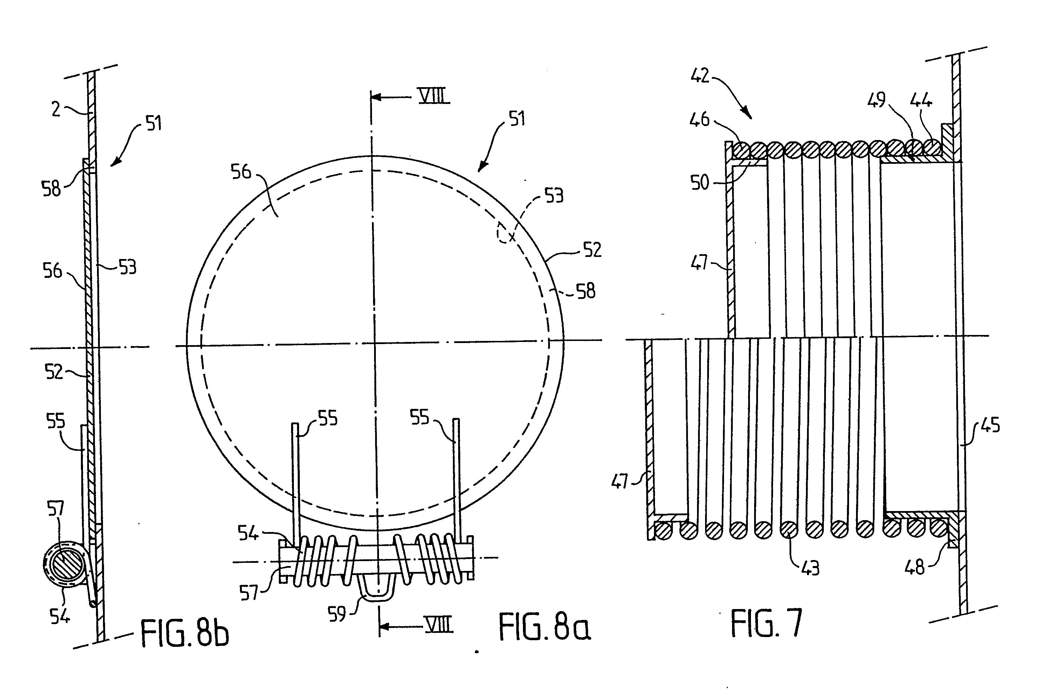

On prévoit également un deuxième clapet 34 dans le conduit de sortie 12 du ventilateur 1. Le clapet 34 est représenté en détail en référence à la figure 6. Le clapet 34 présente de légères différences avec le clapet 21. En particulier, pour des raisons d'encombrement notamment, le support 23 du clapet 31 présente sensiblement la forme d'une cloche alors que le support 35 du clapet 34 est sensiblement plan.

Le support 35 est fixé au carter 2 par l'intermédiaire d'entretoises tubulaires 36, de vis 37 et d'écrous 38. Le clapet comporte un obturateur 39 dont la forme est sensiblement celle d'un disque. L'obturateur est guidé par une vis 29, fixée par l'extrémité de sa tige au support 35 par un écrou 30. Un ressort 40 est disposé de façon similaire au ressort 31, il est de même taré à une valeur déterminée. Le ressort 40 permet d'appliquer l'obturateur 39 contre le siège 41 du clapet. De préférence, une grille 33 est placée entre le siège du clapet et l'obturateur.

On comprend que la face externe de l'obturateur 39 ou la face externe de la grille 33 si elle est prévue, est en contact avec la pression supérieure à la pression atmosphérique qui règne à l'intérieur du conduit de sortie 12 du ventilateur 1 lorsque celui-ci fonctionne, tandis que le corps du clapet 34 est placé à l'extérieur du conduit 12, qui est à la pression atmosphérique.

On peut également prévoir de remplacer le premier et/ou le deuxième clapet(s) par un troisième clapet 42 tel que représenté à la figure 7. Ce clapet est constitué par un ressort hélicoïdal 43, dont au moins la première spire 44 est fixée à la périphérie de l'orifice 45 ménagé dans le carter 2 et dont au moins la dernière spire 46 est fixée à une plaque 47 dont la forme est sensiblement identique à la section du ressort 43, de façon à obturer la partie centrale de celui-ci. Le ressort 43 est un ressort de traction précontraint à une valeur déterminée, de sorte qu'il est à spires jointives au repos.

De préférence, comme indiqué sur la figure 7, une pièce intermédiaire 48 est fixée à la périphérie de l'orifice 45 ménagé dans le carter 2. Cette pièce 48 comporte une portion 49 de forme sensiblement cylindrique et de section inférieure à celle du ressort, de telle sorte que les premières spires du ressort entourent la portion 49 et peuvent être fixées à celle-ci. De même, la plaque 47 comporte de préférence une portion 50 de forme sensiblement cylindrique et de section inférieure à celle du ressort, de telle sorte que les dernières spires du ressort 43 entourent la portion 50 et peuvent être fixées à celle-ci.

Lorsque ce troisième clapet 42 remplace le premier clapet 21, la face interne de la plaque 47 est en contact avec la pression atmosphérique, tandis qu'elle est en contact avec une pression supérieure à la pression atmosphérique lorsque le troisième clapet 42 remplace le deuxième clapet 34.

On peut également prévoir de remplacer le premier et/ou le deuxième clapet(s) par un quatrième clapet 51 tel que représenté aux figures 8a et 8b. Ce clapet comprend un obturateur 52 sensiblement plan et dont la forme est choisie sensiblement identique à celle de l'orifice 53 ménagé dans le carter 2 de façon à obturer celui-ci. Un ressort de torsion 54 est fixé par ses deux extrémités libres 55 sur la face 56 de l'obturateur 52, opposée à celle en regard de l'orifice 53. Le ressort 54 est enroulé autour d'un axe 57, placé dans un plan parallèle à celui de l'orifice 53 et fixé au carter au niveau du siège 58. Sa partie centrale 59 est appliquée contre le carter. Il est précontraint de façon à ce que l'obturateur 52 soit au repos appliqué contre son siège 58 et se soulève à une pression donnée, mettant ainsi en communication l'intérieur du carter 2 avec l'extérieur.

Lorsque ce quatrième clapet 51 remplace le premier clapet 21, la face de l'obturateur 52, en regard de l'orifice 53, est en contact avec la pression atmosphérique, tandis qu'elle est en contact avec une pression supérieure à la pression atmosphérique lorsque le quatrième clapet 51 remplace le deuxième clapet 34.

Nous allons maintenant décrire le fonctionnement du dispositif selon l'invention, monté sur un appareil agricole tel que décrit précédemment, dont le semoir comprend au moins un distributeur à dépression dont l'enceinte constituant la chambre à dépression est reliée à une gaine d'aspiration 7 par l'intermédiaire d'un tuyau 11 de dépression, et dont l'épandeur comporte au moins un venturi, relié au conduit 12 de sortie du ventilateur par l'intermédiaire d'un tuyau 14 de pression lorsque l'épandeur est en fonction, alors que la ou les ouvertures 13 correspondantes sont obturées par des bouchons 10 lorsque l'épandeur n'est pas utilisé.

Pour un débit d'air compris entre une première et une deuxième bornes et pour un nombre quelconque de tuyau(x) de pression 14 et de tuyau(x) de dépression 11 connectés au ventilateur, le bon fonctionnement de l'épandeur impose que la pression en aval du ventilateur 1, c'est-à-dire dans le conduit de sortie 12, soit toujours supérieure ou égale à un premier seuil minimum ou seuil minimum de pression. Dans les mêmes conditions, le bon fonctionnement du semoir impose que la dépression en amont du ventilateur 1, c'est-à-dire dans les gaines d'aspiration 7, soit toujours (en valeur absolue) supérieure ou égale à un deuxième seuil minimum, ou seuil minimum de dépression, même si aucun tuyau de pression 14 n'est connecté au ventilateur.

Le tarage du ressort 31 du premier clapet 21 est choisi de telle sorte que l'obturateur 27 se soulève de son siège 32 (comme illustré à la partie inférieure de la figure 5), lorsque la dépression à l'intérieur du carter 2 du ventilateur devient supérieure (en valeur absolue) à une première valeur. L'ouverture du clapet correspondant à cette première valeur permet de limiter la dépression à l'entrée du ventilateur à un premier seuil maximum ou seuil maximum de dépression, par admission d'air à la pression atmosphérique à l'amont du ventilateur. Comme indiqué précédemment, les caractéristiques d'un ventilateur sont telles que pour un débit d'air absorbé par le ventilateur, la pression totale du ventilateur est imposée. Le premier seuil maximum ou le tarage correspondant du ressort 31 est choisi de façon à ce que la pression en sortie du ventilateur correspondante soit égale au premier seuil minimum. Ainsi, la pression en aval du ventilateur 1 sera toujours supérieure au premier seuil minimum.

De même, le tarage du ressort 40 du deuxième clapet 34 est choisi de façon à ce que l'obturateur 39 s'écarte de son siège 41 (comme illustré dans la partie inférieure de la figure 6) lorsque la pression à l'intérieur du carter 2 devient supérieure à une deuxième valeur. L'ouverture du clapet permet alors de limiter l'augmentation de la pression à la sortie du ventilateur à un deuxième seuil maximum ou seuil maximum de pression, par échappement d'air comprimé vers l'atmosphère. Ce deuxième seuil maximum (ou le tarage correspondant du ressort 40) est choisi de telle sorte que la dépression à l'entrée du ventilateur soit égale au deuxième seuil minimum. Ainsi, la dépression en amont du ventilateur 1 est toujours supérieure (en valeur absolue) au deuxième seuil minimum.

On comprend alors qu'il suffit de choisir de façon appropriée le tarage des ressorts 31 et 40 des premier et deuxième clapets 21 et 34 pour que le fonctionnement du ventilateur 1 soit régulé entre le seuil minimum et le seuil maximum de dépression et entre le seuil minimum et le seuil maximum de pression.

Les essais réalisés ont montré que le fonctionnement des premier et deuxième clapets 21 et 34 pouvait entraîner des problèmes de vibrations. En effet, le mouvement de l'obturateur 27, 39, par rapport à son siège 32, 41 entraîne un fonctionnement en tout ou rien du clapet 21, 34. C'est pourquoi, on place de préférence entre le siège du clapet 32, 41 et l'obturateur 27, 39 une grille 33 qui permet d'orienter plus favorablement les flux d'air et de créer un film d'air entre la grille 33 et l'obturateur 27, 39 afin d'amortir les chocs entre l'obturateur 27, 39 et son siège 32, 41.

On constate que le troisième clapet, décrit en référence à la figure 7, permet d'éviter les inconvénients des clapets fonctionnant en tout ou rien. En effet, l'ouverture du clapet s'effectue par un décollement progressif des spires les unes par rapport aux autres, l'air s'échappant par les espaces ainsi ménagés entre les spires. Ce troisième clapet rend inutile la présence d'une grille 33.

On constate qu'il en est de même pour le quatrième clapet décrit en référence à la figure 8.

Le dispositif selon l'invention a été décrit relativement à un appareil agricole dont le semoir comporte au moins un distributeur de graines à dépression et dont l'épandeur est pneumatique.

On peut de même monter le dispositif selon l'invention sur un appareil agricole dont le semoir comporte au moins un distributeur de graines fonctionnant à la fois grâce à une source de pression et une source de dépression. Dans ce cas, au moins un distributeur est connecté au ventilateur par l'intermédiaire d'un tuyau de pression et d'un tuyau de dépression.

Dans ce cas, l'appareil agricole peut comporter aussi un épandeur de produits phyto-sanitaires.

Des essais ont été réalisés pour un ventilateur dont les caractéristiques sont les suivantes :
- pour un débit d'air absorbé par le ventilateur compris entre 0,14 et 0,36 m³/s, la pression totale du ventilateur est de 12000 Pa,
- pour un débit d'air compris entre 0,36 et 0,56 m³/s, la pression totale du ventilateur décroît de façon continue jusqu'à 10500 Pa,
- pour un débit d'air compris entre 0,56 et 0,69 m³/s, la pression totale du ventilateur décroît de façon continue jusqu'à 9500 Pa.

Un tarage adéquat des clapets du dispositif selon l'invention permet d'obtenir une pression en aval du ventilateur comprise entre 5400 Pa et 7300 Pa et une dépression en amont comprise entre 2200 Pa et 4700 Pa pour un débit d'air absorbé par le ventilateur compris entre 0,14 et 0,69 m³/s.

Enfin, les signes de références insérés après les caractéristiques techniques énoncées dans les revendications, ont pour seul but de faciliter la compréhension de ces dernières et ne peuvent avoir en aucun cas pour effet de limiter l'invention aux modes particuliers de réalisation qui viennent d'être décrits.

**Revendications**

1. Procédé de régulation automatique du point de fonctionnement d'un ventilateur, utilisé dans un appareil agricole dont le fonctionnement nécessite au moins une source de pression différente de la pression atmosphérique, entre un seuil minimal et un seuil maximal de pression en aval du ventilateur et/ou un seuil minimal et un seuil maximal de dépression en amont dudit ventilateur, pour un débit d'air absorbé par le ventilateur compris entre une première et une deuxième bornes, caractérisé en ce qu'il consiste à mettre en communication l'amont du ventilateur avec l'atmosphère de telle sorte que la pression en aval du ventilateur ne devienne pas inférieure audit seuil minimal de pression et à mettre en communication l'aval du ventilateur avec l'atmosphère de telle sorte que la dépression en amont ne devienne pas inférieure audit seuil minimal de dépression.

2. Dispositif pour la régulation automatique du point de fonctionnement d'un ventilateur, utilisé dans un appareil agricole dont le fonctionnement nécessite au moins une source de pression différente de la pression atmosphérique, entre un seuil minimal et un seuil maximal de pression en aval du ventilateur et/ou un seuil minimal et un seuil maximal de dépression en amont du ventilateur, pour un débit d'air absorbé par le ventilateur compris entre une première et une deuxième bornes, caractérisé en ce qu'il comprend un premier clapet (21) placé dans la partie amont du ventilateur et un deuxième clapet (34) placé dans la partie aval du ventilateur, ledit premier clapet étant taré de façon à mettre l'amont du ventilateur en communication avec l'extérieur de telle sorte que la pression en aval ne devienne pas inférieure au seuil minimal de pression et ledit deuxième clapet étant taré de façon à mettre l'aval du ventilateur en communication avec l'extérieur de telle sorte que la dépression en amont ne devienne pas inférieure au seuil minimal de dépression.

3. Dispositif selon la revendication 2, caractérisé en ce que ledit premier clapet (21) est placé dans le carter (2) du ventilateur (1).

4. Dispositif selon l'une des revendications 2 et 3, caractérisé en ce que ledit deuxième clapet (34) est placé dans le conduit de sortie (12) du ventilateur (1).

5. Dispositif selon l'une des revendications 2 à 4, caractérisé en ce que ledit premier clapet (21) comprend un support (23) placé à l'intérieur du ventilateur (1), un obturateur (27) appliqué contre son siège (32) par un ressort (31) taré et dont la face externe est en contact avec la pression atmosphérique.

6. Dispositif selon l'une des revendications 2 à 5, caractérisé en ce que ledit deuxième clapet (34) comprend un support (35) placé à l'extérieur du ventilateur (1), un obturateur (39) appliqué contre son siège (41) par un ressort (40) taré et dont la face interne est en contact avec la pression atmosphérique.

7. Dispositif selon l'une des revendications 5 ou 6, caractérisé en ce qu'une grille (33) est placée entre le siège (32, 41) du clapet (21, 34) et l'obturateur (27, 39).

8. Dispositif selon l'une des revendications 2 à 4, caractérisé en ce que ledit premier clapet (21) est constitué par un ressort de traction précontraint (43) à spires jointives au repos, fixé par au moins une spire (44) à la face interne du ventilateur (1) et dont au moins la dernière spire (46) supporte une plaque (47) fermant la partie centrale dudit ressort.

9. Dispositif selon l'une des revendications 2 à 4 et 8, caractérisé en ce que ledit deuxième clapet (34) est constitué par un ressort de traction précontraint (43) à spires jointives au repos, fixé par au moins une spire (44) à la face externe du ventilateur (1) et dont au moins la deuxième spire (46) supporte une plaque (47) fermant la partie centrale dudit ressort.

10. Dispositif selon l'une des revendications 2 à 4, caractérisé en ce que l'un au moins desdits premier et second clapets (21,34) est constitué par un obturateur (52) pouvant obturer l'orifice (53) sur lequel est placé ledit clapet, en étant appliqué contre le siège (58) du clapet par un ressort (54) de torsion précontraint dont l'axe (57) est situé dans un plan parallèle à celui de l'orifice (53) et fixé à proximité dudit siège (58).

11. Semoir à dépression comportant, au moins un distributeur de graines à dépression et, éventuellement, au moins un épandeur pneumatique de produits phyto-sanitaires, caractérisé en ce qu'il comporte un seul ventilateur et un dispositif de régulation dudit ventilateur selon l'une des revendications 2 à 10, au moins un distributeur étant relié à l'amont dudit ventilateur par un tuyau (11) de dépression et au moins un épandeur étant relié à l'aval dudit ventilateur par un tuyau (14) de pression.

12. Semoir à dépression comportant au moins un distributeur de graines à pression et à dépression, caractérisé en ce qu'il comporte un seul ventilateur et un dispositif de régulation dudit ventilateur selon l'une des revendications 2 à 10, au moins un distributeur étant relié à l'amont dudit ventilateur par un tuyau (11) de dépression et à l'aval dudit ventilateur par un tuyau (14) de pression.

13. Semoir à dépression selon la revendication 12, caractérisé en ce qu'il comporte de plus au moins un épandeur pneumatique de produits phyto-sanitaires, au moins un épandeur étant relié à l'aval dudit ventilateur par un tuyau (14) de pression.

FIG. 1

FIG. 2

FIG. 3

FIG. 4

EP 0 381 562 A1

FIG.6

FIG.5

FIG.7

FIG.8a

FIG.8b

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | SOVIET INVENTIONS ILLUSTRATED, semaine 8618, 16 mai 1986, section P/Q, classe P, resume no. 86-117559/18, Derwent Publications Ltd. Londres, GB; &SU-A-1183 011(V.I. KHALABUZAR)7.10.85 | 1, 2, 11, 12 | F04D27/00 A01C15/04 |
| A,D | EP-A-0037775 (NODET-GOUGIS) * page 1, ligne 3,4 * * page 5, ligne 22 - page 6, ligne 32 * | 1, 2, 11, 12 | |
| A | DE-U-8808547 (KARL BECKER) * le document en entier * | 1, 2, 11-13 | |
| A | FR-A-2279032 (STRULIK) * page 2, ligne 33 - page 3, ligne 29 * | 1-4, 6, 10 | |
| A | US-A-4124916 (FROMKNECHT) * colonne 6, lignes 17 - 50; figures 1, 3 * | 1, 2, 5 | |

**DOMAINES TECHNIQUES RECHERCHES (Int. Cl.5 )**

F04D
A01C
A01M

Le présent rapport a été établi pour toutes les revendications

| Lieu de la recherche | Date d'achèvement de la recherche | Examinateur |
|---|---|---|
| LA HAYE | 19 AVRIL 1990 | TEERLING J.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)